# EUROPEAN PATENT APPLICATION

(11) **EP 4 851 203 A1**
(43) Date of publication of application: **09.12.2026**
(21) Application number: 26182308.2
(22) Date of filing: 01.06.2026
(51) Int. Cl.: C08F 6/00, C08J 3/21, C08L 33/06, C08L 33/26

(54) **HYDROGEL AND METHOD FOR PREPARING THE SAME**

(30) Priority: 02.06.2025 KR 20250072268
(71) Applicant: Aldaver Inc., Daejeon 34051 (KR)
(72) Inventor: KIM, Jin-Oh, 34051 Daejeon (KR); KIM, Ikjin, 34051 Daejeon (KR); RYU, Gunyoung, 34051 Daejeon (KR)
(74) Representative: dompatent

(57) **Abstract**

The present invention relates to a hydrogel, comprising: a hydrogel including an acrylic compound; and a coating layer formed on a surface of the hydrogel, wherein the coating layer includes a copolymer including an ethylene-based repeating unit and a hydrophilic vinyl-based repeating unit, and a method for preparing the same.

## Description

### [Technical Field]

The present invention relates to a hydrogel, and a method for preparing the same.

### [Background Art]

A hydrogel is a hydrophilic polymer material characterized by forming a network structure in which polymer chains are threedimensionally crosslinked, and capable of absorbing and retaining a large amount of moisture within the structure. Due to this characteristic, hydrogels have mechanical properties similar to those of soft tissues and thus have excellent biocompatibility, and are widely utilized in various fields such as medical patches, tissue engineering scaffolds, drug delivery systems, wound protective materials, cosmetics, and biosensors.

However, a certain amount of moisture is always present on the surface of a hydrogel, and this manifests as a physical phenomenon referred to as 'stickiness' or 'tackiness' upon contact with an external surface during use. Such stickiness originates from inherent moisture retention capacity and hydrophilicity of the hydrogel, which generates excessive adhesion when the hydrogel comes into contact with an external object or skin. As a result, it may cause discomfort or irritation to a user's skin, and contaminants such as dust, fibers and bacteria may easily adhere thereto, causing hygiene-related issues.

In addition, a hydrogel with strong tackiness may cause pain or skin damage upon detachment after use. Particularly, in the case of products requiring repeated attachment and detachment (for example, medical patches, reusable sensor adhesives, and the like), such tackiness may increase user discomfort and may also adversely affect durability of the product. In medical environments, such stickiness may cause interference between devices or lead to patient dissatisfaction due to a foreign body sensation, and from an industrial perspective, it causes problems in terms of consistency in product quality as well as ease of storage and handling.

In order to solve such problems, various approaches to adhesion control have been proposed. For example, attempts have been made to minimize physical contact by forming a thin film on the surface of a hydrogel or attaching a release film thereto, or by controlling the surface composition of a hydrogel to adjust hydrophilicity or hydrophobicity. In addition, studies have been conducted to influence surface properties by controlling internal network density or crosslinking density of a hydrogel.

However, such existing technologies have limitations in various aspects such as practicality, ease of manufacturing, cost, and durability. For example, technologies requiring separate surface processing or complex multi-step manufacturing processes are not suitable for mass production, and often provide only temporary effects. In addition, measures taken to suppress tackiness frequently have negative impacts on the inherent functions of a hydrogel (for example: moisture retention capacity, mechanical elasticity, transparency or the like).

Accordingly, there is still a need for the development of a technology capable of effectively and continuously controlling the surface property of stickiness while maintaining the inherent functions and structural properties of a hydrogel.

### [Prior Art Documents]

### [Patent Documents]

(Patent Document 1) US Patent No. 8110242 (2012.02.07)
(Patent Document 2) International Publication No. 1995-006680 (1995.03.09)
(Patent Document 3) US Patent No. 10392527 (2019.08.27) [Disclosure]

### [Technical Problem]

It is an object of the present invention to solve the above problems to provide a technology for forming a coating layer composed of a copolymer including an ethylene-based repeating unit and a hydrophilic vinyl-based repeating unit on a surface of a hydrogel including an acrylic compound, thereby effectively reducing surface stickiness while maintaining inherent physical properties and biocompatibility of the hydrogel.

It is another object of the present invention to provide a method for preparing the hydrogel.

### [Technical Solution]

One embodiment of the present invention provides a hydrogel comprising: a hydrogel including an acrylic compound; and a coating layer formed on a surface of the hydrogel, wherein the coating layer includes a copolymer including an ethylene-based repeating unit and a hydrophilic vinyl-based repeating unit.

The acrylic compound may include a repeating unit derived from acrylamide, methacrylamide or acrylic acid.

The copolymer may be represented by the following Formula 1.

[Formula 1] -[-CHᵣCH₂-]ₘ-[-CH₂CHOH-]ₙ-

wherein m and n represent the number of ethylene-based repeating units and the number of hydrophilic vinyl-based repeating units in the copolymer, respectively, and m/(m+n) is 20 to 60 mol%.

Hydrogen bonds may be formed between an amide group or a carboxyl group included in the acrylic compound of the hydrogel and a hydrophilic functional group included in the hydrophilic vinyl-based repeating unit included in the copolymer.

The acrylic compound included in the hydrogel and the copolymer included in the coating layer may be included in a weight ratio of 1:1 to 35:1.

The coating layer may have a thickness of 0.01 to 0.2 mm.

Another embodiment of the present invention provides a method for preparing a hydrogel, the method comprising: (1) curing a hydrogel composition including an acrylic compound, a crosslinking agent, a polymerization initiator and a solvent to prepare a hydrogel; (2) dissolving a copolymer including an ethylene-based repeating unit and a hydrophilic vinyl-based repeating unit in a solvent to prepare a composition for coating; and (3) treating the hydrogel with the composition for coating to form a copolymer coating layer on a surface of the hydrogel.

The acrylic compound may include acrylamide, methacrylamide, acrylic acid, or a combination thereof.

The copolymer may be represented by the following Formula 1.

[Formula 1] -[-CH₂CH₂-]ₘ-[-CH₂CHOH-]ₙ-

wherein m and n represent the number of ethylene-based repeating units and the number of hydrophilic vinyl-based repeating units in the copolymer, respectively, and m/(m+n) is 20 to 60 mol%.

The solvent in the step (2) may be a mixed solvent of an aqueous solvent and a low-molecular-weight alcohol including a C1 to C3 alcohol.

The aqueous solvent and the low-molecular-weight alcohol may be included in a weight ratio (w/w) of 4:6 to 1:9.

The acrylic compound may be included in an amount of 10 to 35 parts by weight based on 100 parts by weight of the solvent included in the hydrogel composition of the step (1).

The copolymer including an ethylene-based repeating unit and a hydrophilic vinyl-based repeating unit may be included in an amount of 1 to 15 parts by weight based on 100 parts by weight of the solvent included in the composition for coating of the step (2).

The step (3) may include impregnating the hydrogel prepared in step (1) in the composition for coating prepared in step (2), followed by drying.

### [Advantageous Effects]

According to the present invention, by forming a coating layer composed of a copolymer including an ethylene-based repeating unit and a hydrophilic vinyl-based repeating unit on a surface of a hydrogel including an acrylic compound, stickiness of the hydrogel surface can be effectively reduced. In particular, the copolymer has a structure including ethylene (-CH₂CH₂-) and a vinyl alcohol-derived hydrophilic repeating unit (-CH₂CHOH-) in a specific molar ratio (m/ (m+n) : 20 to 60 mol%), which forms a uniform and stable hydrophilic protective layer on the hydrogel surface, thereby contributing to the reduction of tackiness.

In addition, the coating layer of the present invention forms hydrogen bonds with an amide group or a carboxyl group provided by an acrylamide, methacrylamide or acrylic acid-derived repeating unit in the hydrogel, thereby exhibiting excellent interfacial adhesion with the hydrogel and high durability such that the coating layer does not readily detach even under external stimuli. As a result, coating is maintained even in an environment of use involving contact with external moisture, sweat, tissue fluid and the like, and surface contamination or unintended adhesion can be significantly reduced.

The present invention has the following technical advantages over competing technologies. In existing technologies, methods of applying a low-molecular-weight lubricant, a silicone-based coating agent or an ionic polymer on the surface have mainly been used to reduce surface stickiness of a hydrogel. However, such approaches have limitations such as changes in hydrogel properties, detachment problem of a coating layer, and reduced biocompatibility. In particular, surface treatment methods based on non-covalent interactions lack long-term stability, and functional degradation frequently occurs during repeated use or washing.

On the other hand, the use of an ethylene-vinyl alcohol copolymer (EVOH-based) proposed in the present invention induces irreversible interactions between polymers through hydrogen bonding, thereby fundamentally improving the problem of surface modification stability encountered in existing technologies. In addition, by optimizing the mixing ratio of an aqueous solvent and a low-molecular-weight alcohol (for example: weight ratio (w/w) of 4:6 to 1:9) as a solvent system of the coating composition, interfacial wettability with the hydrogel and drying properties can be balanced, enabling uniform and reproducible results even in large-area coating processes.

As described above, the present invention exhibits remarkable technical and industrial advancement over existing surface treatment technologies in that it is capable of maintaining the inherent properties of a substrate, such as biocompatibility, flexibility and moisture retention capacity while effectively resolving the problem of surface stickiness of the hydrogel. Furthermore, the hydrogel and the method for preparing the same of the present invention can be utilized in various fields such as medical patches, biosensors and tissue engineering scaffolds, and in particular, a non-tacky highfunctional hydrogel suitable for products that come into direct contact with user's skin or mucous membrane can be provided.

### [Best Mode]

Hereinafter, embodiments of the present invention will be described in detail. Before this, terms or words used in this specification and the claims are not to be interpreted limitedly to common or dictionary meanings, and need to be interpreted as meanings and concepts corresponding to technical ideas of the present invention based on a principle in which the inventors may suitably define concepts of the terms in order to describe their invention in the best possible way. Accordingly, constitutions described in the embodiments described in this specification are just most preferred one embodiment of the present invention and do not represent all of the technical ideas of the present invention, and therefore, it needs to be understood that there may be various equivalents and modified examples that may replace these at the time of filing the present application.

Throughout this specification, when a part is described as "comprising" a component, this means that, unless particularly stated otherwise, it does not exclude other components but may further include other components.

In addition, description of specifying components by limiting or adding components may be applied to all inventions unless there is a particular restriction, and is not limited to a specific invention.

In addition, throughout the description of invention and the claims of the present application, singular forms include plural forms as well unless otherwise stated.

In addition, throughout the description of invention and the claims of the present application, "or" includes "and" unless otherwise stated. Therefore, "including A or B" means all three cases of including A, including B, or including A and B.

In addition, all numerical ranges include both the endpoint values and all intermediate values therebetween, unless explicitly stated to exclude them.

Hereinafter, a hydrogel according to one embodiment of the present invention and a method for preparing the same will be described.

### Hydrogel

The hydrogel according to one embodiment of the present invention includes: a hydrogel including an acrylic compound; and a coating layer formed on a surface of the hydrogel, wherein the coating layer includes a copolymer including an ethylene-based repeating unit and a hydrophilic vinyl-based repeating unit.

Hereinafter, the hydrogel of the present invention will be described more specifically.

The acrylic compound included in the hydrogel according to the present invention has a hydrophilic functional group, and strong hydration ability and high absorbency may be exhibited when forming a hydrogel therethrough. In addition, since the acrylic compound forms a dense three-dimensional network structure through a crosslinking reaction, it not only enables formation of a hydrogel having excellent tensile strength, elongation and elasticity, but also allows copolymerization with other functional monomers, thereby providing flexibility in designing a hydrogel with tailored properties.

The acrylic compound constituting such a hydrogel is selected so as to secure a balance of properties such as flexibility, water holding capacity, biocompatibility and surface modifiability of the hydrogel. As such an acrylic compound, acrylamide, methacrylamide, acrylic acid and mixtures thereof may be used, and functional properties of the hydrogel may be improved by including repeating units derived from these compounds.

Specifically, the acrylamide is a monomer forming a basic skeleton of the hydrogel, and has excellent water solubility and hydrogel-forming ability and may provide a transparent and flexible hydrogel after polymerization. In particular, the amide group (-CONH₂) of the acrylamide is capable of forming hydrogen bonds with a hydrophilic polymer of the coating layer formed on the surface of the hydrogel, thereby contributing to enhancing coating adhesion and stability. The methacrylamide is structurally similar to acrylamide, however, the introduction of an alkyl substituent increases steric hindrance, which serves advantageously to increase physical strength or deformation resistance of the hydrogel. The acrylic acid may impart negative charges and pH-responsive properties to the hydrogel by introducing a carboxyl group (-COOH), and is effective in improving interfacial adhesion with the coating layer at the same time by having an excellent hydrogen bond-forming ability.

Such an acrylic compound may be used alone, or two or more thereof may be copolymerized in an appropriate ratio depending on the application and required properties of the hydrogel. For example, a combination of acrylamide and acrylic acid may simultaneously satisfy the two requirements of mechanical flexibility and surface functional group introduction, and through this, an optimal composition satisfying both coating suitability and hydrogel functionality may be obtained.

In addition, the hydrogel according to the present invention may further include a natural hydrophilic polymer in addition to the acrylic compound, and the natural hydrophilic polymer may include agarose, alginate, gelatin, sodium carboxymethyl cellulose (CMC-Na) or a combination thereof. The acrylic compound and the natural hydrophilic polymer may also form a double network through a curing process of the composition, and physical properties such as tensile strength and elongation of a hydrogel may be further strengthened therethrough. Herein, when the natural hydrophilic polymer is sodium carboxymethyl cellulose (CMC-Na), the viscosity may be 400 to 800 cP. When the viscosity is 400 cP or less, the crosslinked structure may not be formed between the acrylic compound and the CMC-Na, and when the viscosity exceeds 800 cP, there is a risk that properties of the formed hydrogel may change, and therefore, it is preferred to use CMC-Na having a viscosity in the above range.

In one embodiment of the present invention, a double-network structure including both an acrylic compound and a natural polymer improves energy absorption capacity of the hydrogel compared to a single-network structure and may secure excellent mechanical stability by inducing stress dispersion upon fracture, and through this, may further enhance its potential for use as a high-reliability biomaterial capable of withstanding external impacts or long-term use.

The hydrogel according to one embodiment of the present invention allows for precise control over properties of a final hydrogel, such as mechanical strength, absorbency, elasticity and viscoelasticity, by adjusting the type and content of the acrylic compound, the concentration of the crosslinking agent, the polymerization condition or the like. Such controllability enables preparation of customized hydrogel according to the purpose, and in particular, allows for hydrogel design suitable for various biomedical applications, such as wound protective materials, contact lenses, tissue adhesives, biosensors and drug delivery systems.

Furthermore, the acrylic compound is capable of inducing rapid and efficient gelation using a thermal or photoinitiator during the polymerization process, which provides advantageous benefits in terms of mass production and process simplification. In particular, when using a photopolymerization method, spatially selective gelation is possible, enabling applications in precise patterning or microstructure control.

As described above, a hydrogel formed based on an acrylic compound may secure excellent hydration properties and mechanical properties, however, there is a problem in that stickiness occurs at the surface due to the high water content and hydrophilicity of the hydrogel itself. Such stickiness causes unnecessary adhesion to surrounding tissues or foreign substances when using the hydrogel as a medical contact material or biomaterial, leading to user discomfort and reduced biocompatibility.

In one embodiment of the present invention, a coating layer composed of a copolymer including an ethylene-based repeating unit and a hydrophilic vinyl-based repeating unit is formed on the surface of the hydrogel in order to effectively solve such problems.

The coating layer is in contact with the surface of the hydrogel to form a closely adhered structure, and increases functional stability by suppressing stickiness resulting from the high water content of the hydrogel itself and preventing attachment of foreign matter from the external environment or moisture evaporation. The copolymer included in the coating layer may maintain stable adhesion for a long period of time through physical/chemical interactions with the hydrogel surface. In particular, formation of hydrogen bonds between an amide group or carboxyl group present on the surface of the acrylic hydrogel and a hydrophilic vinyl-based repeating unit (for example: hydroxyl group) in the copolymer enables stable interfacial bonding of the coating layer, allowing it to be maintained for a long period of time without delamination.

In one embodiment of the present invention, the copolymer may have a structure represented by the following Formula 1.

[Formula 1] -[-CH₂CH₂-]ₘ-[-CH₂CHOH-]ₙ-

wherein m and n represent the number of ethylene-based repeating units and the number of hydrophilic vinyl-based repeating units in the copolymer, respectively, and it is preferred that m/(m+n) is adjusted to be in a range of 20 to 60 mol%. The ethylene-based repeating unit has hydrophobicity and serves to control a moisture absorption rate of the copolymer, thereby being effective in suppressing the occurrence of tackiness by preventing excessive formation of a moisture film on the surface of the coating layer. Meanwhile, the hydrophilic vinyl-based repeating unit mainly includes a hydrophilic functional group such as a hydroxyl group (-OH), contributing to increasing interfacial affinity with the hydrogel substrate. By setting the molar ratio of these two repeating units in 20 to 60 mol%, a balance between hydrophobicity and hydrophilicity is secured, and stability of the coating layer itself may be achieved while maintaining interfacial adhesion with the hydrogel. For example, when the m/(m+n) ratio is less than 20 mol%, tackiness may remain on the coating layer surface due to excessive hydrophilicity, and when the m/(m+n) ratio exceeds 60 mol% on the contrary, there may be a problem in that the coating layer fails to sufficiently adhere to the hydrogel surface and undergoes delamination.

In addition, in one embodiment of the present invention, hydrogen bonds may be formed between a functional group of the acrylic compound included in the hydrogel and a functional group included in the copolymer. Specifically, the acrylic compound may include an amide group (-CONH₂) or a carboxyl group (-COOH), which may form hydrogen bonds with a hydroxyl group (-OH) or the like present in the hydrophilic vinyl-based repeating unit of the copolymer. Although these hydrogen bonds are non-covalent, they have relatively high interaction energy, and may contribute to adhesion stability of the coating layer beyond physical adhesion. The hydrogen bonding allows the coating layer to self-adhere to the hydrogel substrate without using a separate chemical bonding agent such as an adhesive, and as a result, excellent peel resistance may be exhibited even under repeated changes in moisture, bending and stress while maintaining biocompatibility. In particular, hydrogen bonds between the amide group and the hydroxyl group have high directionality and selectivity, and the bonds may be stably maintained without being readily broken as long as the interfacial contact is maintained above a certain level, significantly reducing a phenomenon of delamination or lifting during use.

Considering the interactions between the components of the coating layer and the composition of the hydrogel described above, their weight ratio also plays a very crucial role. In one embodiment of the present invention, the acrylic compound included in the hydrogel and the copolymer included in the coating layer may be included in a weight ratio of about 1:1 to 35:1, and for example, may be included in a weight ratio of 1:1 to 35:1, 1:3 to 35:1, 1:1 to 34:1, 1:1 to 33:1, 1:1 to 32:1, 1:1 to 31:1, 1:3 to 30.5:1, 1:1 to 30:1, 1:1 to 29:1, 1:1 to 28:1, 1:1 to 27:1, 1:1 to 26:1, 1:1 to 25:1, 1:1 to 24:1, 1:1 to 23:1, 1:1 to 22:1, 1:1 to 21:1, 1:1 to 20:1, 1:1 to 19:1, 1:1 to 18:1, 1:1 to 17:1, 1:1 to 16:1, 1:1 to 15:1, 1:1 to 14:1, 1:1 to 13:1, 1:1 to 12:1, 1:1 to 11:1, 1:1 to 10:1, 1:1 to 9:1, 1:1 to 8.92:1, 1:1 to 8:1, 1:1 to 7:1, 1:1 to 6:1, 1:1 to 5:1, 1:1 to 4:1, 1:1 to 3:1 or 1:1 to 2.5:1, and may be included in a weight ratio of 2.5:1 to 8.92:1. This weight ratio range provides the conditions for stably forming the coating layer with a certain thickness and adhesion without impairing flexibility and water retention properties of the hydrogel substrate. When the weight ratio of the copolymer is excessively high, the coating layer becomes thick, reducing flexibility or deformation compliance of the hydrogel, and when the content of the copolymer is too low on the contrary, it is difficult to form a uniform film on the surface, resulting in an insignificant stickiness-reducing effect.

In addition, the thickness of the coating layer may be properly adjusted according to the functionality and purpose of use of the hydrogel, and is preferably set in a range of about 0.01 to 0.2 mm. When the thickness of the coating layer is less than 0.01 mm, continuity of the film is insufficient, significantly reducing the effect of surface protection and stickiness reduction, and when the thickness of the coating layer exceeds 0.2 mm on the contrary, stretchability and flexibility of the hydrogel are reduced, causing discomfort during use or delamination. Accordingly, the present invention is designed such that the coating layer is formed within the above thickness range, thereby ensuring a balance between surface protection performance and user convenience of the hydrogel. In particular, the hydrogel of the present invention may be applied to various fields such as medical patches, biosensors and tissue adhesives, and herein, controlling the thickness of the coating layer very effectively works in improving tactile sensation and tackiness upon contact with the skin of a user.

### Method for Preparing Hydrogel

Another embodiment of the present invention provides a method for preparing the coating layer-formed hydrogel. Specifically, the hydrogel may be prepared through the steps of (1) curing a hydrogel composition including an acrylic compound, a crosslinking agent, a polymerization initiator and a solvent to prepare a hydrogel, (2) dissolving a copolymer including an ethylene-based repeating unit and a hydrophilic vinyl-based repeating unit in a solvent to prepare a composition for coating, and (3) treating the hydrogel with the composition for coating to form a copolymer coating layer on a surface of the hydrogel.

Hereinafter, the method for preparing the hydrogel and the coating layer formed on the surface thereof according to the present invention will be described in more detail for each step.

First, in step (1), a composition including an acrylic compound, a crosslinking agent, a polymerization initiator and a solvent is prepared, and the composition is cured to form a hydrogel.

Specific types and properties of the acrylic compound are the same as those described above, and therefore, specific descriptions thereof will be omitted.

In one embodiment of the present invention, the acrylic compound may be included in an amount of 10 to 35 parts by weight based on 100 parts by weight of the solvent included in the composition, and for example, may be included in an amount of 10 parts by weight or more, 11 parts by weight or more, 12 parts by weight or more, 13 parts by weight or more, 14 parts by weight or more, 15 parts by weight or more, 16 parts by weight or more, 17 parts by weight or more, 18 parts by weight or more, 19 parts by weight or more, 20 parts by weight or more, 21 parts by weight or more or 22 parts by weight or more, and may be 35 parts by weight or less, 34 parts by weight or less, 33 parts by weight or less, 32 parts by weight or less, 31 parts by weight or less, 30 parts by weight or less, 29 parts by weight or less, 28 parts by weight or less, 27 parts by weight or less, 26 parts by weight or less, 25 parts by weight or less, 24 parts by weight or less or 23 parts by weight or less.

When the content of the acrylic compound satisfies the above range, deterioration in hydrogel properties may be prevented, and a phenomenon in which the composition solution boils during the curing process of the composition may be prevented.

In addition, in one embodiment of the present invention, when the composition further includes a natural hydrophilic polymer in addition to the acrylic compound, the natural hydrophilic polymer may be included in an amount of 0.1 to 5 parts by weight based on 100 parts by weight of the solvent included in the composition, and for example, may be included in an amount of 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, 1.0 parts by weight or more, 1.1 parts by weight or more, 1.2 parts by weight or more, 1.3 parts by weight or more, 1.4 parts by weight or more, 1.5 parts by weight or more, 1.6 parts by weight or more, 1.7 parts by weight or more, 1.8 parts by weight or more, 1.9 parts by weight or more, 2.0 parts by weight or more, 2.1 parts by weight or more, 2.2 parts by weight or more, 2.3 parts by weight or more, 2.4 parts by weight or more or 2.5 parts by weight or more, and may be 5.0 parts by weight or less, 4.9 parts by weight or less, 4.8 parts by weight or less, 4.7 parts by weight or less, 4.6 parts by weight or less, 4.5 parts by weight or less, 4.4 parts by weight or less, 4.3 parts by weight or less, 4.2 parts by weight or less, 4.1 parts by weight or less, 4.0 parts by weight or less, 3.9 parts by weight or less, 3.8 parts by weight or less, 3.7 parts by weight or less, 3.6 parts by weight or less, 3.5 parts by weight or less, 3.4 parts by weight or less, 3.3 parts by weight or less, 3.2 parts by weight or less, 3.1 parts by weight or less, 3.0 parts by weight or less, 2.9 parts by weight or less, 2.8 parts by weight or less, 2.7 parts by weight or less or 2.6 parts by weight or less.

When the content of the natural hydrophilic polymer satisfies the above range, deterioration in hydrogel properties may be prevented, and problems occurring during the curing process due to an excessive increase in the viscosity of the composition may be prevented.

The crosslinking agent included in the hydrogel composition of the present invention may perform a role of further improving physical, mechanical properties and chemical stability of a hydrogel by crosslinking the acrylic compounds, or the acrylic compound and the natural hydrophilic polymer.

Accordingly, any type of the crosslinking agent may be used as long as it is a material capable of crosslinking the acrylic compounds, or the acrylic compound and the natural hydrophilic polymer in the composition of the present invention, and for example, at least one selected from the group consisting of N,N'-methylenebisacrylamide (MBA), trimethylolpropane tri(meth)acrylate, ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate may be used.

The crosslinking agent may be included in an amount of 0.01 to 0.2 parts by weight based on 100 parts by weight of the solvent included in the composition according to the present invention, and for example, may be included in an amount of 0.01 to 0.1 parts by weight, preferably 0.02 to 0.05 parts by weight. When the content of the crosslinking agent is less than the above range, crosslinking sufficient to impart mechanical strength and chemical stability of a hydrogel may not be achieved, and when the content exceeds the above range, excessive crosslinking may occur, thereby posing a risk of deterioration in properties such as tensile properties.

The polymerization initiator is a material used to initiate curing of the composition, specifically, a chain reaction of materials included in the composition, and may specifically refer to a thermal curing initiator, which is a material readily generating radicals using a heat source or a catalyst.

Any type of the polymerization initiator may be used as long as it is a material capable of initiating a curing reaction by a heat source or a catalyst, and for example, at least one selected from the group consisting of potassium persulfate (KPS), peroxides, azo compounds, azobisisobutyronitrile (AIBN), persulfates, ammonium persulfate (APS), sodium persulfate, hydrogen peroxide, and benzoyl peroxide may be used.

Herein, a polymerization catalyst may be used together with the polymerization initiator in order to promote the generation of free radicals or to increase a rate of the initiation reaction, and for example, N,N,N',N'-tetramethylethylenediamine (TEMED), diethylenetriamine (DETA), ethylenediamine (EDA), N,N-dimethylethylenediamine (DMEDA), trimethylamine (TMA), sodium bisulfite (NaHSO₃), sodium thiosulfate (Na₂S₂O₃), ferrous sulfate (FeSO₄), or ascorbic acid (vitamin C) may be used therewith. The polymerization catalyst may be included in an amount of 0.01 to 0.4 parts by weight based on 100 parts by weight of the solvent included in the composition, and it is preferred not to use an excessive amount in order to prevent hydrogel properties from deteriorating through a rapid curing reaction.

The polymerization initiator may be included in an amount of 0.01 to 0.5 parts by weight based on 100 parts by weight of the solvent included in the composition according to the present invention, and for example, may be included in an amount of 0.1 to 0.5 parts by weight, preferably 0.1 to 0.4 parts by weight. When the content of the initiator is less than the above range, the curing process of the composition according to the present invention may not proceed smoothly or the curing time may be excessively delayed. When the content of the initiator exceeds the above-mentioned range, a rapid radical reaction may proceed, thereby causing side reactions or having unintended effects on other components of the composition according to the present invention, and an excessive amount of residual components may remain after curing.

The composition according to the present invention may further include additives such as a surfactant, a plasticizer, a stabilizer, a defoaming agent or a diluent in addition to the crosslinking agent and the polymerization initiator. The additives may be included in a minimum amount necessary for the above-mentioned action to occur for economic reasons, and may be preferably included in an amount of 0.01 to 0.4 parts by weight based on 100 parts by weight of the solvent included in the hydrogel composition.

As the solvent capable of favorably dissolving each component such as the acrylic compound, the polyethylene glycol, the crosslinking agent and the polymerization initiator included in the composition, a solvent such as water may be used.

Next, in step (2), a copolymer including an ethylene-based repeating unit and a hydrophilic vinyl-based repeating unit is dissolved in a solvent to prepare a composition for coating.

The copolymer may have a structure represented by, for example, Formula 1:

[Formula 1] -[-CH₂-CH₂-]ₘ-[-CH₂-CHOH-]ₙ-

wherein, m and n represent the number of ethylene-based repeating units and the number of hydrophilic vinyl-based repeating units in the copolymer, respectively, and it is preferred that m/ (m+n) is adjusted to be in a range of 20 to 60 mol%. The ethylene-based repeating unit has hydrophobicity and serves to control a moisture absorption rate of the copolymer, thereby being effective in suppressing the occurrence of tackiness by preventing excessive formation of a moisture film on the surface of the coating layer. Meanwhile, the hydrophilic vinyl-based repeating unit mainly includes a hydrophilic functional group such as a hydroxyl group (-OH), contributing to increasing interfacial affinity with the hydrogel substrate. By setting the molar ratio of these two repeating units in 20 to 60 mol%, a balance between hydrophobicity and hydrophilicity is secured, and stability of the coating layer itself may be achieved while maintaining interfacial adhesion with the hydrogel. For example, when the m/(m+n) ratio is less than 20 mol%, tackiness may remain on the coating layer surface due to excessive hydrophilicity, and when the m/(m+n) ratio exceeds 60 mol% on the contrary, there may be a problem in that the coating layer fails to sufficiently adhere to the hydrogel surface and undergoes delamination.

The solvent for preparing the composition for coating is preferably composed of a mixed solvent of an aqueous solvent and a low-molecular-weight alcohol. Specifically, distilled water, deionized water or the like may be used as the aqueous solvent, and as the low-molecular-weight alcohol, a C1 to C3 alcohol, for example, methanol, ethanol, propanol or the like may be used. More preferably, using ethanol is advantageous in terms of balancing solubility and volatility properties of the copolymer including an ethylene-based repeating unit and a hydrophilic vinyl-based repeating unit.

The mixing ratio of the aqueous solvent and the low-molecular-weight alcohol is preferably adjusted in a weight ratio (w/w) range of 4:6 to 1:9. More preferably, a range of 3:7 to 2:8 is effective. When the proportion of the aqueous solvent is excessively high, solubility of the copolymer including an ethylene-based repeating unit and a hydrophilic vinyl-based repeating unit decreases sharply, making it difficult to prepare a high-concentration solution, and when the alcohol content is excessively high on the contrary, the volatilization rate increases, causing problems in that it is difficult to precisely control coating thickness and uniformity.

The copolymer including an ethylene-based repeating unit and a hydrophilic vinyl-based repeating unit is preferably included at a concentration of 1 to 15 parts by weight based on 100 parts by weight of the solvent. When the content of the copolymer including an ethylene-based repeating unit and a hydrophilic vinyl-based repeating unit is less than 1 part by weight, the coating layer formed on the hydrogel surface has a thin thickness and lacks continuity, resulting in an insignificant stickiness-reducing effect, and when the content exceeds 15 parts by weight on the contrary, solution viscosity increases and dissolution stability decreases, leading to problems in that the coating layer is non-uniformly formed or laminated to an excessive thickness.

In addition, according to the present invention, the stickiness-reducing effect on the hydrogel surface is closely correlated with the composition of the acrylic compound, and is particularly attributed to the formation of strong hydrogen bonds between the acrylic compound and the hydroxyl group (-OH) of the copolymer including an ethylene-based repeating unit and a hydrophilic vinyl-based repeating unit. However, since the number of hydrogen bonding groups exposed on the hydrogel surface varies with the content of the acrylic compound, the concentration of the copolymer including an ethylene-based repeating unit and a hydrophilic vinyl-based repeating unit also needs to be adjusted accordingly. For example, when the acrylic compound content is high, it may be preferred to set the content of the copolymer including an ethylene-based repeating unit and a hydrophilic vinyl-based repeating unit close to the upper limit to facilitate the formation of more hydrogen bonds. On the contrary, when the content of the acrylic compound is low, an excessively high concentration of the copolymer including an ethylene-based repeating unit and a hydrophilic vinyl-based repeating unit may instead cause aggregation and non-uniform coating.

Through the optimized solvent composition and copolymer content setting as described above, the present invention has advantages of effectively improving the stickiness problem of the hydrogel surface, and stably forming a thin and uniform coating layer.

Next, step (3) involves treating the hydrogel with the composition for coating prepared above to form a copolymer coating layer on the surface of the hydrogel. Herein, the term 'treatment' in this specification is used as a comprehensive concept encompassing a series of operations that allow the composition for coating to be applied on or brought into contact with the surface of the hydrogel so that it is uniformly diffused, adsorbed or attached to the surface, and in particular, may be understood as a surface modification method aimed to reduce stickiness of the hydrogel.

The method of treating the composition for coating may be selected in various ways depending on the hydrogel surface structure, viscosity, water content and desired coating thickness, and a method such as impregnation, dipping, spray coating, brush coating or spin coating may be preferably used. Among these, impregnation is particularly a representative method capable of uniformly forming a coating layer on the surface by immersing all or part of the hydrogel substrate on the coating composition for a certain period of time, and may be proposed as an effect method in the examples of the present invention.

For example, the impregnation treatment is preferably performed continuously for a certain period of time to promote interactions, particularly the formation of hydrogen bonds, between the hydrogel surface and the coating composition. The coating time may be adjusted depending on the composition and surface structure of the hydrogel. For example, when the content of the acrylic compound is high and the number of hydrogen bonding groups is large, impregnation for a short period of time (for example, about 10 seconds) may be effective since hydrogen bonds may be sufficiently formed within a relatively short period of time. On the contrary, when the density of the acrylic compound is low, a relatively long period of time (for example: unit of several minutes) may be required. Preferably, the coating time during the impregnation treatment is limited to about 30 seconds to 10 minutes. When the coating time is less than 30 seconds, a sufficient coating layer may not be formed on the hydrogel surface, resulting in an insignificant stickiness-improving effect, and when the coating time exceeds 10 minutes, moisture loss may occur inside the hydrogel or the structure may be damaged, adversely affecting mechanical properties, elasticity and the like. Accordingly, the coating time may be optimized considering acrylamide content, pore structure, hydrogen bonding group concentration, and the like of the hydrogel. In addition, the number of coatings is preferably limited to 3 to 5 times in the present invention. When the number of coating is less than 3 times, it is difficult to form sufficient hydrogen bonds, diminishing the stickiness-reducing effect, and when the coating treatment exceeds 5 times, it may be difficult to control the coating layer thickness, or tackiness or surface roughness may increase instead due to the non-uniform film formation. Accordingly, repeated coating needs to be performed under constant time intervals and drying conditions, and it is preferred to check the surface condition through drying and intermediate evaluation after each cycle.

Through the treatment steps as above, a coating layer based on the copolymer including an ethylene-based repeating unit and a hydrophilic vinyl-based repeating unit is selectively formed on the hydrogel surface, and this coating layer is stably attached via strong hydrogen bonding between the acrylic compound and the hydroxyl group (-OH) of the copolymer including an ethylene-based repeating unit and a hydrophilic vinyl-based repeating unit. As a result, tackiness, that is, stickiness of the hydrogel is substantially reduced, which provides effects of improving the tactile feel of products using the hydrogel and significantly improving handling during packaging and storage.

Hereinafter, specific examples of the present invention will be provided. However, the examples described below are only to specifically illustrate or explain the present invention, and the present invention is not limited thereby. In addition, description not provided herein may be sufficiently inferred technically by those skilled in the art, and therefore, the description is not included.

### Example 1-1

(1) At room temperature (about 25°C), 100 g of distilled water was placed in a 250 mL beaker, and while being stirred using a magnetic stirrer, 12 g of acrylamide and 0.0096 g of N,N'-methylenebisacrylamide (MBA) as a crosslinking agent were sequentially added thereto and completely dissolved.
(2) To the mixture, 0.0612 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 3.36 g of ethylene-vinyl alcohol copolymer (EVOH) was dissolved in a solvent in which ethanol and distilled water are mixed in a ratio of 7:3 (w/w) to prepare a uniform EVOH solution.
(5) The prepared hydrogel sample was immersed in the EVOH solution for about 2 minutes, and then naturally dried in the air for about 5 minutes. This immersion-drying process was repeated three times in total to form a uniform EVOH coating layer on the surface of the hydrogel.

### Example 1-2

(1) At room temperature (about 25°C), 100 g of distilled water was placed in a 250 mL beaker, and while being stirred using a magnetic stirrer, 12 g of acrylamide and 0.0096 g of N,N'-methylenebisacrylamide (MBA) as a crosslinking agent were sequentially added thereto and completely dissolved. Subsequently, 0.5 g of agarose was added thereto, and then completely dissolved while being heated to 80°C. Then, the temperature of the solution was lowered to room temperature.
(2) To the mixture, 0.0612 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 3.36 g of ethylene-vinyl alcohol copolymer (EVOH) was dissolved in a solvent in which ethanol and distilled water are mixed in a ratio of 7:3 (w/w) to prepare a uniform EVOH solution.
(5) The prepared hydrogel sample was immersed in the EVOH solution for about 1 minute, and then naturally dried in the air for about 5 minutes. This immersion-drying process was repeated three times in total to form a uniform EVOH coating layer on the surface of the hydrogel.

### Example 1-3

(1) At room temperature (about 25°C), 100 g of distilled water was placed in a 250 mL beaker, and while being stirred using a magnetic stirrer, 18 g of acrylamide and 0.0128 g of N,N'-methylenebisacrylamide (MBA) as a crosslinking agent were sequentially added thereto and completely dissolved. Subsequently, 0.1 g of agarose was added thereto, and then completely dissolved while being heated to 80°C. Then, the temperature of the solution was lowered to room temperature.
(2) To the mixture, 0.0816 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 5.90 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 5 minutes, and then naturally dried in the air for about 5 minutes. This immersion-drying process was repeated three times in total to form a uniform EVOH coating layer on the surface of the hydrogel.

### Example 1-4

A coating layer-formed hydrogel was obtained in the same manner as in Example 1-3, except that 0.59 g of ethylene-vinyl alcohol copolymer (EVOH) was dissolved in a solvent in which ethanol and distilled water are mixed in a ratio of 6:4 (w/w) to prepare a uniform EVOH solution.

### Example 1-5

A coating layer-formed hydrogel was obtained in the same manner as in Example 1-3, except that 17.7 g of ethylene-vinyl alcohol copolymer (EVOH) was dissolved in a solvent in which ethanol and distilled water are mixed in a ratio of 9:1 (w/w) to prepare a uniform EVOH solution, the prepared hydrogel sample was immersed in the EVOH solution for about 1 minute and then naturally dried in the air for about 5 minutes, and then this immersion-drying process was repeated three times in total to form a uniform EVOH coating layer on the surface of the hydrogel.

### Example 1-6

(1) At room temperature (about 25°C), 100 g of distilled water was placed in a 250 mL beaker, and while being stirred using a magnetic stirrer, 24 g of acrylamide and 0.0192 g of N,N'-methylenebisacrylamide (MBA) as a crosslinking agent were sequentially added thereto and completely dissolved. Subsequently, 0.1 g of agarose was added thereto, and then completely dissolved while being heated to 80°C. Then, the temperature of the solution was lowered to room temperature.
(2) To the mixture, 0.1224 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 8.68 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 3 minutes, and then naturally dried in the air for about 5 minutes. This immersion-drying process was repeated three times in total to form a uniform EVOH coating layer on the surface of the hydrogel.

### Example 1-7

A coating layer-formed hydrogel was obtained in the same manner as in Example 1-6, except that 0.5 g of agarose was added.

### Example 1-8

(1) At room temperature (about 25°C), 100 g of distilled water was placed in a 250 mL beaker, and while being stirred using a magnetic stirrer, 24 g of acrylamide and 0.0192 g of N,N'-methylenebisacrylamide (MBA) as a crosslinking agent were sequentially added thereto and completely dissolved. Subsequently, 0.5 g of alginate was added thereto, and then the mixture was stirred at a high speed to ensure uniform dispersion and complete dissolution in the solution.
(2) To the mixture, 0.1224 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 8.68 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 5 minutes, and then naturally dried in the air for about 5 minutes. This immersion-drying process was repeated three times in total to form a uniform EVOH coating layer on the surface of the hydrogel.

### Example 1-9

(1) At room temperature (about 25°C), 100 g of distilled water was placed in a 250 mL beaker, and while being stirred using a magnetic stirrer, 30 g of acrylamide and 0.0288 g of N,N'-methylenebisacrylamide (MBA) as a crosslinking agent were sequentially added thereto and completely dissolved. Subsequently, 1.0 g of alginate was added thereto, and then the mixture was stirred at a high speed to ensure uniform dispersion and complete dissolution in the solution.
(2) To the mixture, 0.1833 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 11.79 g of ethylene-vinyl alcohol copolymer (EVOH) was dissolved in a solvent in which ethanol and distilled water are mixed in a ratio of 9:1 (w/w) to prepare a uniform EVOH solution.
(5) The prepared hydrogel sample was immersed in the EVOH solution for about 1 minute, and then naturally dried in the air for about 5 minutes. This immersion-drying process was repeated three times in total to form a uniform EVOH coating layer on the surface of the hydrogel.

### Example 1-10

(1) At room temperature (about 25°C), 100 g of distilled water was placed in a 250 mL beaker, and while being stirred using a magnetic stirrer, 20 g of acrylamide and 0.0192 g of N,N'-methylenebisacrylamide (MBA) as a crosslinking agent were sequentially added thereto and completely dissolved. Subsequently, 1.5 g of gelatin was added thereto, and then completely dissolved while being heated to 60°C. Then, the temperature of the solution was lowered to room temperature.
(2) To the mixture, 0.1224 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 6.07 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 5 minutes, and then naturally dried in the air for about 5 minutes. This immersion-drying process was repeated three times in total to form a uniform EVOH coating layer on the surface of the hydrogel.

### Example 1-11

(1) At room temperature (about 25°C), 100 g of distilled water was placed in a 250 mL beaker, and while being stirred using a magnetic stirrer, 20 g of acrylamide and 0.0192 g of N,N'-methylenebisacrylamide (MBA) as a crosslinking agent were sequentially added thereto and completely dissolved. Subsequently, 3.0 g of gelatin was added thereto, and then completely dissolved while being heated to 60°C. Then, the temperature of the solution was lowered to room temperature.
(2) To the mixture, 0.1224 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 8.61 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 2 minutes, and then naturally dried in the air for about 5 minutes. This immersion-drying process was repeated three times in total to form a uniform EVOH coating layer on the surface of the hydrogel.

### Example 1-12

(1) At room temperature (about 25°C), 100 g of distilled water was placed in a 250 mL beaker, and while being stirred using a magnetic stirrer, 24 g of acrylamide and 0.0192 g of N,N'-methylenebisacrylamide (MBA) as a crosslinking agent were sequentially added thereto and completely dissolved. Subsequently, 3.0 g of sodium carboxymethyl cellulose (CMC-Na) was added thereto, and then completely dissolved while being heated to 60°C. Then, the temperature of the solution was lowered to room temperature.
(2) To the mixture, 0.1224 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 8.89 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 2 minutes, and then naturally dried in the air for about 5 minutes. This immersion-drying process was repeated three times in total to form a uniform EVOH coating layer on the surface of the hydrogel.

### Example 1-13

(1) At room temperature (about 25°C), 100 g of distilled water was placed in a 250 mL beaker, and while being stirred using a magnetic stirrer, 30 g of acrylamide and 0.0288 g of N,N'-methylenebisacrylamide (MBA) as a crosslinking agent were sequentially added thereto and completely dissolved. Subsequently, 1.0 g of sodium carboxymethyl cellulose (CMC-Na) was added thereto, and then completely dissolved while being heated to 60°C. Then, the temperature of the solution was lowered to room temperature.
(2) To the mixture, 0.1833 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 11.79 g of ethylene-vinyl alcohol copolymer (EVOH) was dissolved in a solvent in which ethanol and distilled water are mixed in a ratio of 9:1 (w/w) to prepare a uniform EVOH solution.
(5) The prepared hydrogel sample was immersed in the EVOH solution for about 5 minutes, and then naturally dried in the air for about 5 minutes. This immersion-drying process was repeated three times in total to form a uniform EVOH coating layer on the surface of the hydrogel.

### Comparative Example 1-1

A hydrogel sample having no coating layer formed on the surface was prepared by performing steps (1) to (3) in the same manner as in Example 1-1, while omitting steps (4) and (5) for forming an ethylene-vinyl alcohol copolymer (EVOH) coating layer on the surface of the hydrogel sample.

### Comparative Example 1-2

A hydrogel sample having no coating layer formed on the surface was prepared by performing steps (1) to (3) in the same manner as in Example 1-2, while omitting steps (4) and (5) for forming an ethylene-vinyl alcohol copolymer (EVOH) coating layer on the surface of the hydrogel sample.

### Comparative Example 1-3

A hydrogel sample having no coating layer formed on the surface was prepared by performing steps (1) to (3) in the same manner as in Example 1-3, while omitting steps (4) and (5) for forming an ethylene-vinyl alcohol copolymer (EVOH) coating layer on the surface of the hydrogel sample.

### Comparative Example 1-4

A hydrogel sample having no coating layer formed on the surface was prepared by performing steps (1) to (3) in the same manner as in Example 1-6, while omitting steps (4) and (5) for forming an ethylene-vinyl alcohol copolymer (EVOH) coating layer on the surface of the hydrogel sample.

### Comparative Example 1-5

A hydrogel sample having no coating layer formed on the surface was prepared by performing steps (1) to (3) in the same manner as in Example 1-7, while omitting steps (4) and (5) for forming an ethylene-vinyl alcohol copolymer (EVOH) coating layer on the surface of the hydrogel sample.

### Comparative Example 1-6

A hydrogel sample having no coating layer formed on the surface was prepared by performing steps (1) to (3) in the same manner as in Example 1-8, while omitting steps (4) and (5) for forming an ethylene-vinyl alcohol copolymer (EVOH) coating layer on the surface of the hydrogel sample.

### Comparative Example 1-7

A hydrogel sample having no coating layer formed on the surface was prepared by performing steps (1) to (3) in the same manner as in Example 1-9, while omitting steps (4) and (5) for forming an ethylene-vinyl alcohol copolymer (EVOH) coating layer on the surface of the hydrogel sample.

### Comparative Example 1-8

A hydrogel sample having no coating layer formed on the surface was prepared by performing steps (1) to (3) in the same manner as in Example 1-10, while omitting steps (4) and (5) for forming an ethylene-vinyl alcohol copolymer (EVOH) coating layer on the surface of the hydrogel sample.

### Comparative Example 1-9

A hydrogel sample having no coating layer formed on the surface was prepared by performing steps (1) to (3) in the same manner as in Example 1-11, while omitting steps (4) and (5) for forming an ethylene-vinyl alcohol copolymer (EVOH) coating layer on the surface of the hydrogel sample.

### Comparative Example 1-10

A hydrogel sample having no coating layer formed on the surface was prepared by performing steps (1) to (3) in the same manner as in Example 1-12, while omitting steps (4) and (5) for forming an ethylene-vinyl alcohol copolymer (EVOH) coating layer on the surface of the hydrogel sample.

### Comparative Example 1-11

A hydrogel sample having no coating layer formed on the surface was prepared by performing steps (1) to (3) in the same manner as in Example 1-13, while omitting steps (4) and (5) for forming an ethylene-vinyl alcohol copolymer (EVOH) coating layer on the surface of the hydrogel sample.

### Example 2-1

(1) At room temperature (about 25°C), 100 g of distilled water was placed in a 250 mL beaker, and while being stirred using a magnetic stirrer, 18 g of methacrylamide and 0.024 g of N,N'-methylenebisacrylamide (MBA) as a crosslinking agent were sequentially added thereto and completely dissolved.
(2) To the mixture, 0.1886 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 3.54 g of ethylene-vinyl alcohol copolymer (EVOH) was dissolved in a solvent in which ethanol and distilled water are mixed in a ratio of 6:4 (w/w) to prepare a uniform EVOH solution.
(5) The prepared hydrogel sample was immersed in the EVOH solution for about 5 minutes, and then naturally dried in the air for about 5 minutes. This immersion-drying process was repeated three times in total to form a uniform EVOH coating layer on the surface of the hydrogel.

### Example 2-2

(1) At room temperature (about 25°C), 100 g of distilled water was placed in a 250 mL beaker, and while being stirred using a magnetic stirrer, 18 g of methacrylamide and 0.0128 g of N,N'-methylenebisacrylamide (MBA) as a crosslinking agent were sequentially added thereto and completely dissolved. Subsequently, 0.1 g of agarose was added thereto, and then completely dissolved while being heated to 60°C. Then, the temperature of the solution was lowered to room temperature.
(2) To the mixture, 0.0816 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 5.90 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 5 minutes, and then naturally dried in the air for about 5 minutes. This immersion-drying process was repeated three times in total to form a uniform EVOH coating layer on the surface of the hydrogel.

### Example 2-3

A coating layer-formed hydrogel was obtained in the same manner as in Example 2-2, except that 0.5 g of agarose was added, the prepared hydrogel sample was immersed in the EVOH solution for about 1 minute and then naturally dried in the air for about 5 minutes, and then this immersion-drying process was repeated three times in total to form a uniform EVOH coating layer on the surface of the hydrogel.

### Comparative Example 2-1

A hydrogel sample having no coating layer formed on the surface was prepared by performing steps (1) to (3) in the same manner as in Example 2-1, while omitting steps (4) and (5) for forming an ethylene-vinyl alcohol copolymer (EVOH) coating layer on the surface of the hydrogel sample.

### Comparative Example 2-2

A hydrogel sample having no coating layer formed on the surface was prepared by performing steps (1) to (3) in the same manner as in Example 2-2, while omitting steps (4) and (5) for forming an ethylene-vinyl alcohol copolymer (EVOH) coating layer on the surface of the hydrogel sample.

### Comparative Example 2-3

A hydrogel sample having no coating layer formed on the surface was prepared by performing steps (1) to (3) in the same manner as in Example 2-3, while omitting steps (4) and (5) for forming an ethylene-vinyl alcohol copolymer (EVOH) coating layer on the surface of the hydrogel sample.

### Example 3-1

(1) At room temperature (about 25°C), 100 g of distilled water was placed in a 250 mL beaker, and while being stirred using a magnetic stirrer, 15 g of acrylic acid and 0.0144 g of N,N'-methylenebisacrylamide (MBA) as a crosslinking agent were sequentially added thereto and completely dissolved.
(2) To the mixture, 0.0916 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 5.75 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 5 minutes, and then naturally dried in the air for about 5 minutes. This immersion-drying process was repeated three times in total to form a uniform EVOH coating layer on the surface of the hydrogel.

### Example 3-2

(1) At room temperature (about 25°C), 100 g of distilled water was placed in a 250 mL beaker, and while being stirred using a magnetic stirrer, 15 g of acrylic acid and 0.0144 g of N,N'-methylenebisacrylamide (MBA) as a crosslinking agent were sequentially added thereto and completely dissolved. Subsequently, 0.3 g of agarose was added thereto, and then completely dissolved while being heated to 60°C. Then, the temperature of the solution was lowered to room temperature.
(2) To the mixture, 0.0916 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 11.50 g of ethylene-vinyl alcohol copolymer (EVOH) was dissolved in a solvent in which ethanol and distilled water are mixed in a ratio of 9:1 (w/w) to prepare a uniform EVOH solution.
(5) The prepared hydrogel sample was immersed in the EVOH solution for about 2 minutes, and then naturally dried in the air for about 5 minutes. This immersion-drying process was repeated three times in total to form a uniform EVOH coating layer on the surface of the hydrogel.

### Example 3-3

(1) At room temperature (about 25°C), 100 g of distilled water was placed in a 250 mL beaker, and while being stirred using a magnetic stirrer, 20 g of acrylic acid and 0.032 g of N,N'-methylenebisacrylamide (MBA) as a crosslinking agent were sequentially added thereto and completely dissolved. Subsequently, 2.25 g of sodium carboxymethyl cellulose (CMC-Na) was added thereto, and then completely dissolved while being heated to 60°C. Then, the temperature of the solution was lowered to room temperature.
(2) To the mixture, 0.2448 g of ammonium persulfate (APS) was added as a polymerization initiator, then 20 µl of N,N,N',N'-tetramethylethylenediamine (TEMED), which is a polymerization accelerator, was further added thereto, and then the result was stirred for about 1 minute using a magnetic stirrer to prepare a reaction composition.
(3) The prepared reaction composition was dispensed into a silicone mold, and then cured for about 30 minutes at room temperature. After the curing was completed, the cured product was demolded to obtain a hydrogel sample.
(4) 8.55 g of ethylene-vinyl alcohol copolymer (EVOH) was dissolved in a solvent in which ethanol and distilled water are mixed in a ratio of 8:2 (w/w) to prepare a uniform EVOH solution.
(5) The prepared hydrogel sample was immersed in the EVOH solution for about 3 minutes, and then naturally dried in the air for about 5 minutes. This immersion-drying process was repeated three times in total to form a uniform EVOH coating layer on the surface of the hydrogel.

### Comparative Example 3-1

A hydrogel sample having no coating layer formed on the surface was prepared by performing steps (1) to (3) in the same manner as in Example 3-1, while omitting steps (4) and (5) for forming an ethylene-vinyl alcohol copolymer (EVOH) coating layer on the surface of the hydrogel sample.

### Comparative Example 3-2

A hydrogel sample having no coating layer formed on the surface was prepared by performing steps (1) to (3) in the same manner as in Example 3-2, while omitting steps (4) and (5) for forming an ethylene-vinyl alcohol copolymer (EVOH) coating layer on the surface of the hydrogel sample.

### Comparative Example 3-3

A hydrogel sample having no coating layer formed on the surface was prepared by performing steps (1) to (3) in the same manner as in Example 3-3, while omitting steps (4) and (5) for forming an ethylene-vinyl alcohol copolymer (EVOH) coating layer on the surface of the hydrogel sample.

Each composition of the hydrogel and the coating layer according to the Examples and the Comparative Examples are shown in Tables 1 to 3 below.

**[Table 1]**

| Classification | Water (g) | AAm* (g) | Agarose (g) | MBA (g) | APS (g) | TEMED (µl) | EtOH:H₂O (w/w) | EVOH (g) |
|---|---|---|---|---|---|---|---|---|
| Example 1-1 | 100 | 12 | 0 | 0.0096 | 0.0612 | 20 | 7:03 | 3.36 |
| Example 1-2 | 100 | 12 | 0.5 | 0.0096 | 0.0612 | 20 | 7:03 | 3.36 |
| Example 1-3 | 100 | 18 | 0.1 | 0.0128 | 0.0816 | 20 | 8:02 | 5.9 |
| Example 1-4 | 100 | 18 | 0.1 | 0.0128 | 0.0816 | 20 | 6:04 | 0.59 |
| Example 1-5 | 100 | 18 | 0.1 | 0.0128 | 0.0816 | 20 | 9:01 | 17.7 |
| Example 1-6 | 100 | 24 | 0.1 | 0.0192 | 0.1224 | 20 | 8:02 | 8.68 |
| Example 1-7 | 100 | 24 | 0.5 | 0.0192 | 0.1224 | 20 | 8:02 | 8.68 |
| Comparative Example 1-1 | 100 | 12 | 0 | 0.0096 | 0.0612 | 20 | - | - |
| Comparative Example 1-2 | 100 | 12 | 0.5 | 0.0096 | 0.0612 | 20 | - | - |
| Comparative Example 1-3 | 100 | 18 | 0.1 | 0.0128 | 0.0816 | 20 | - | - |
| Comparative Example 1-4 | 100 | 24 | 0.1 | 0.0192 | 0.1224 | 20 | - | - |
| Comparative Example 1-5 | 100 | 24 | 0.5 | 0.0192 | 0.1224 | 20 | - | - |
| Classification | Water (g) | AAm* (g) | Alginate (g) | MBA (g) | APS (g) | TEMED (µl) | EtOH: H₂O (w/w) | EVOH (g) |
| Example 1-8 | 100 | 24 | 0.5 | 0.0192 | 0.1224 | 20 | 8:02 | 8.68 |
| Example 1-9 | 100 | 30 | 1 | 0.0288 | 0.1833 | 20 | 9:01 | 11.79 |
| Comparative Example 1-6 | 100 | 24 | 0.5 | 0.0192 | 0.1224 | 20 | - | - |
| Comparative Example 1-7 | 100 | 30 | 1 | 0.0288 | 0.1833 | 20 | - | - |
| Classification | Water (g) | AAm* (g) | Gelatin (g) | MBA (g) | APS (g) | TEMED (µl) | EtOH:H₂O (w/w) | EVOH (g) |
| Example 1-10 | 100 | 20 | 1.5 | 0.0192 | 0.1224 | 20 | 8:02 | 6.07 |
| Example 1-11 | 100 | 20 | 3 | 0.0192 | 0.1224 | 20 | 8:02 | 8.61 |
| Comparative Example 1-8 | 100 | 20 | 1.5 | 0.0192 | 0.1224 | 20 | - | - |
| Comparative Example 1-9 | 100 | 20 | 3 | 0.0192 | 0.1224 | 20 | - | - |
| Classification | Water (g) | AAm* (g) | CMC** (g) | MBA (g) | APS (g) | TEMED (µl) | EtOH:H₂O (w/w) | EVOH (g) |
| Example 1-12 | 100 | 24 | 3 | 0.0192 | 0.1224 | 20 | 8:02 | 8.89 |
| Example 1-13 | 100 | 30 | 1 | 0.0288 | 0.1833 | 20 | 9:01 | 11.79 |
| Comparative Example 1-10 | 100 | 24 | 3 | 0.0192 | 0.1224 | 20 | - | - |
| Comparative Example 1-11 | 100 | 30 | 1 | 0.0288 | 0.1833 | 20 | - | - |

| | | | | | | | | |
|---|---|---|---|---|---|---|---|---|
| * AAm: Acrylamide ** CMC: Sodium carboxymethyl cellulose (CMC-Na) | | | | | | | | |

**[Table 2]**

| Classification | Water (g) | MAAm* (g) | Agarose (g) | MBA (g) | APS (g) | TEMED (µl) | EtOH:H₂O (w/w) | EVOH (g) |
|---|---|---|---|---|---|---|---|---|
| Example 2-1 | 100 | 18 | 0 | 0.024 | 0.1886 | 20 | 6:04 | 3.54 |
| Example 2-2 | 100 | 18 | 0.1 | 0.0128 | 0.0816 | 20 | 8:02 | 5.9 |
| Example 2-3 | 100 | 18 | 0.5 | 0.0128 | 0.0816 | 20 | 8:02 | 5.9 |
| Comparative Example 2-1 | 100 | 18 | 0 | 0.024 | 0.1886 | 20 | - | - |
| Comparative Example 2-2 | 100 | 18 | 0.1 | 0.0128 | 0.0816 | 20 | - | - |
| Comparative Example 2-3 | 100 | 18 | 0.5 | 0.0128 | 0.0816 | 20 | - | - |

| | | | | | | | | |
|---|---|---|---|---|---|---|---|---|
| * MAAm: Methacrylamide | | | | | | | | |

**[Table 3]**

| Classification | Water (g) | acrylic acid (g) | Agarose (g) | MBA (g) | APS (g) | TEMED (µl) | EtOH:H₂O (w/w) | EVOH (g) |
|---|---|---|---|---|---|---|---|---|
| Example 3-1 | 100 | 15 | 0 | 0.0144 | 0.0916 | 20 | 8:02 | 5.75 |
| Example 3-2 | 100 | 15 | 0.3 | 0.0144 | 0.0916 | 20 | 9:01 | 11.5 |
| Comparative Example 3-1 | 100 | 15 | 0 | 0.0144 | 0.0916 | 20 | - | - |
| Comparative Example 3-2 | 100 | 15 | 0.3 | 0.0144 | 0.0916 | 20 | - | - |
| Classification | Water (g) | Acrylic Acid (g) | CMC** (g) | MBA (g) | APS (g) | TEMED (µl) | EtOH:H₂O (w/w) | EVOH (g) |
| Example 3-3 | 100 | 20 | 2.25 | 0.032 | 0.2448 | 20 | 8:02 | 8.55 |
| Comparative Example 3-3 | 100 | 20 | 2.25 | 0.032 | 0.2448 | 20 | - | - |

| | | | | | | | | |
|---|---|---|---|---|---|---|---|---|
| ** CMC: Sodium carboxymethyl cellulose (CMC-Na) | | | | | | | | |

### Experimental Example: Peel Test

A peel test was performed to evaluate adhesive properties of the hydrogel samples prepared in the Examples and the Comparative Examples. The hydrogel sample was prepared using a mold produced using a 3D printer, and a mechanical property measuring device manufactured by YEONJIN S-Tech Corporation was used to measure peel force.

The test was performed according to the following procedure. First, the hydrogel sample having length of 100 mm, a thickness of 3 mm and a width of 20 mm was uniformly attached to a thin steel plate. After that, the specimen was firmly fixed using a roller grip, and then pulled at a tensile speed of 3 mm/s to measure peel force. The peel measurement interval was set from 15 mm to 20 mm, and the change in force was recorded until the sample was completely peeled off from the steel plate. Among the measured data, maximum force (maximum peel force, N) was used as a key indicator of this experimental example, and the results are shown in the following Table 5.

**[Table 4]**

| Classification | Peel Test (N) |
|---|---|
| Example 1-1 | 0.09±0.02 |
| Example 1-2 | 0.08±0.01 |
| Example 1-3 | 0.10±0.02 |
| Example 1-4 | 0.21±0.03 |
| Example 1-5 | 0.08±0.01 |
| Example 1-6 | 0.16±0.02 |
| Example 1-7 | 0.09±0.01 |
| Example 1-8 | 0.11±0.01 |
| Example 1-9 | 0.13±0.03 |
| Example 1-10 | 0.11±0.03 |
| Example 1-11 | 0.12±0.01 |
| Example 1-12 | 0.14±0.02 |
| Example 1-13 | 0.13±0.01 |
| Comparative Example 1-1 | 0.16±0.04 |
| Comparative Example 1-2 | 0.12±0.01 |
| Comparative Example 1-3 | 0.23±0.03 |
| Comparative Example 1-4 | 0.28±0.03 |
| Comparative Example 1-5 | 0.15±0.02 |
| Comparative Example 1-6 | 0.27±0.01 |
| Comparative Example 1-7 | 0.25±0.05 |
| Comparative Example 1-8 | 0.24±0.01 |
| Comparative Example 1-9 | 0.25±0.02 |
| Comparative Example 1-10 | 0.25±0.03 |
| Comparative Example 1-11 | 0.28±0.01 |
| | |
| Example 2-1 | 0.12±0.02 |
| Example 2-2 | 0.12±0.01 |
| Example 2-3 | 0.11±0.01 |
| Comparative Example 2-1 | 0.23±0.02 |
| Comparative Example 2-2 | 0.19±0.02 |
| Comparative Example 2-3 | 0.20±0.02 |
| | |
| Example 3-1 | 0.12±0.02 |
| Example 3-2 | 0.09±0.01 |
| Example 3-3 | 0.08±0.02 |
| Comparative Example 3-1 | 0.27±0.01 |
| Comparative Example 3-2 | 0.25±0.02 |
| Comparative Example 3-3 | 0.20±0.01 |

Referring to Table 4, it can be seen that surface stickiness improved by forming a coating layer including a copolymer including an ethylene-based repeating unit and a hydrophilic vinyl-based repeating unit on the surface of the hydrogel formed from the hydrogel including an acrylic compound such as acrylamide, methacrylamide or acrylic acid, or the hydrogel formed from the composition further including a natural hydrophilic polymer together with the above-described type of acrylic compound.

Hereinbefore, preferred examples of the present invention have been described in detail, however, the scope of a right of the present invention is not limited thereto, and various modified and improved forms made by those skilled in the art using the basic concept of the present invention defined in the claims also fall within the scope of a right of the present invention.

## Claims

1. A hydrogel, comprising:
a hydrogel including an acrylic compound; and
a coating layer formed on a surface of the hydrogel,
wherein the coating layer includes a copolymer including an ethylene-based repeating unit and a hydrophilic vinyl-based repeating unit.

2. The hydrogel of claim 1, wherein the acrylic compound includes a repeating unit derived from acrylamide, methacrylamide or acrylic acid.

3. The hydrogel of claim 1, wherein the copolymer is represented by the following Formula 1:
[Formula 1] -[-CH₂CH₂-]ₘ-[-CH₂CHOH-]ₙ-
wherein m and n represent the number of ethylene-based repeating units and the number of hydrophilic vinyl-based repeating units in the copolymer, respectively; and
m/(m+n) is 20 to 60 mol%.

4. The hydrogel of claim 1, wherein hydrogen bonds are formed between an amide group or a carboxyl group included in the acrylic compound of the hydrogel, and a hydrophilic functional group included in the hydrophilic vinyl-based repeating unit included in the copolymer.

5. The hydrogel of claim 1, wherein the acrylic compound included in the hydrogel and the copolymer included in the coating layer are included in a weight ratio of 1:1 to 35:1.

6. The hydrogel of claim 1, wherein the coating layer has a thickness of 0.01 to 0.2 mm.

7. A method for preparing a hydrogel, the method comprising:
(1) curing a hydrogel composition including an acrylic compound, a crosslinking agent, a polymerization initiator and a solvent to prepare a hydrogel;
(2) dissolving a copolymer including an ethylene-based repeating unit and a hydrophilic vinyl-based repeating unit in a solvent to prepare a composition for coating; and
(3) treating the hydrogel with the composition for coating to form a copolymer coating layer on a surface of the hydrogel.

8. The method of claim 7, wherein the acrylic compound includes acrylamide, methacrylamide, acrylic acid, or a combination thereof.

9. The method of claim 7, wherein the copolymer is represented by the following Formula 1:
[Formula 1] -[-CH₂-CH₂-]ₘ-[-CH₂-CHOH-]ₙ-
wherein m and n represent the number of ethylene-based repeating units and the number of hydrophilic vinyl-based repeating units in the copolymer, respectively; and
m/(m+n) is 20 to 60 mol%.

10. The method of claim 7, wherein the solvent in the step (2) is a mixed solvent of an aqueous solvent and a low-molecular-weight alcohol including a C1 to C3 alcohol.

11. The method of claim 10, wherein the aqueous solvent and the low-molecular-weight alcohol are included in a weight ratio (w/w) of 4:6 to 1:9.

12. The method of claim 7, wherein the acrylic compound is included in an amount of 10 to 35 parts by weight based on 100 parts by weight of the solvent included in the hydrogel composition of the step (1).

13. The method of claim 7, wherein the copolymer including an ethylene-based repeating unit and a hydrophilic vinyl-based repeating unit is included in an amount of 1 to 15 parts by weight based on 100 parts by weight of the solvent included in the composition for coating of the step (2).

14. The method of claim 7, wherein the step (3) includes impregnating the hydrogel prepared in step (1) in the composition for coating prepared in step (2), followed by drying.
